Europäisches Patentamt

European Patent Office

Office européen des brevets

(11) Veröffentlichungsnummer: **0 281 930**
**B1**

# EUROPÄISCHE PATENTSCHRIFT

(45) Veröffentlichungstag der Patentschrift:
27.06.90

(21) Anmeldenummer: 88103228.8

(22) Anmeldetag: 03.03.88

(51) Int. Cl.⁵: **B29C 55/14, B29C 55/08,**
**B29D 7/01, D01D 5/12, D02J 1/22**

(54) Verfahren zur Herstellung von Ultrahochmodulfasern oder- filmen.

(30) Priorität: 12.03.87 DE 3707902

(43) Veröffentlichungstag der Anmeldung:
14.09.88 Patentblatt 88/37

(45) Bekanntmachung des Hinweises auf die Patenterteilung:
27.06.90 Patentblatt 90/26

(84) Benannte Vertragsstaaten:
AT BE DE ES FR GB IT NL

(73) Patentinhaber: BASF Aktiengesellschaft,
Carl-Bosch-Strasse 38, D-6700 Ludwigshafen(DE)

(72) Erfinder: Petermann, Juergen, Prof. Dr.,
Westpreussenweg 12, D-2150 Buxtehude(DE)
Erfinder: Felt, Klaus, Kiefernberg 39,
D-2100 Hamburg 90(DE)
Erfinder: Karbach, Alexander, Dr., Scheiblerstrasse 81,
D-4150 Krefeld(DE)

(56) Entgegenhaltungen:
US-A- 3 801 404

POLYMER BULLETIN, Band 18, Nr. 4, Oktober 1987,
Seiten 355-360, Springer-Verlag, München, DE; J.
PETERMANN et al.: "Ultradrawing of "springy"
polypropylene films"
JOURNAL OF POLYMER SCIENCE, Band 15, Nr. 79,
Januar 1955, Seiten 31-49, New York, US; A. KELLER:
"Unusual orientation phenomena in polyethylene
interpreted in terms of the morphology"
INDUSTRIAL AND ENGINEERING CHEMISTRY,
PRODUCT RESEARCH AND DEVELOPMENT, Band 13,
Nr. 1, März 1974, Seiten 2-9, Washington, D.C., US; H.S.
BIERENBAUM et al.: "Microporous polymeric films"
JOURNAL OF POLYMER SCIENCE, POLYMER PHYSICS
EDITION, Band 16, Nr. 4, April 1978, John Wiley & Sons,

(56) Entgegenhaltungen: (Fortsetzung)
Inc., New York, US; A. GARTON et al.: "Some effects of
melt-induced orientation on drawing of polypropylene
monofilaments"
POLYMER COMMUNICATIONS, Band 25, Nr. 2,
Februar 1984, Seiten 39-42, Guildford, UK; A. PEGUY et
al.: "Ultra-drawing of high molecular weight
polypropylene"
ENCYCLOPEDIA OF POLYMER SCIENCE AND
ENGINEERING, Band 5, 1986, Seiten 408-415, John
Wiley & Sons, New York, US; E.S. CLARK: "Hard-elastic
behavior"

## Beschreibung

Die Erfindung betrifft ein Verfahren zur Herstellung von Ultrahochmodulfasern oder -filmen aus Folien aus hartelastischen Thermoplasten, die durch uniaxiale Dehnung der Schmelze und Kristallisation hergestellt werden.

Die Herstellung von Ultrahochmodulfasern basiert auf vier unterschiedlichen Verfahren, die nachstehend kurz erläutert werden:

1. Ultraverstreckung von Gelen: Hierbei wird in einer ersten Verfahrensstufe ein Gel des zu verstreckenden Thermoplastes erzeugt, anschließend wird dieses Gel in einer zweiten Verfahrensstufe versponnen und gestreckt. Diese Verfahrensweise ist beschrieben in "Journal of Material Science" 15 (1980), Seiten 505–514.

2. Ultraverstreckung von Einkristallmatten bzw. Festkörpern: Hierbei werden vor der Verstreckung Einkristalle derart gebildet, daß beispielsweise Polyethylen hoher Dichte in p-Xylol bei Siedetemperatur und unter Stickstoffabschluß gelöst wird. Anschließend wird dieser Lösung Methanol zugeführt. Die dabei entstehenden Einkristalle werden aus der Lauge herausfiltriert und anschließend mehrmals mit Aceton gewaschen und im Vakuum getrocknet. Diese Verfahrensweise ist beschrieben in "Polymer Journal" 11 (1979), Seiten 497–502.

3. Ultraverstreckung von Festkörpern durch eine erhitzte Düse hindurch. Diese an sich bekannte Verfahrensweise ist beschrieben in "Polymer" 20 (1979), Seiten 1553–1560.

4. Ultraverstreckung von beispielsweise isotaktischem Polypropylen durch Zonenziehen von Zonenanlassen, d.h. ein Verstrecken in zwei Verfahrensschritten, zuerst Vorverformen und anschließend Nachverformen bei höherer Temperatur. Diese Verfahrensweise ist beschrieben in "Journal of Applied Polymer Science" 20 (1983), Seiten 179–189.

Alle vier Verfahren beinhalten jedoch Nachteile, entweder die Verfahren sind aufwendig, oder die an die Endprodukte – Hochmodulfasern oder -filmen – gestellten Eingenschaften sind nicht ausreichend.

Es stellte sich daher die Augabe, ein einfaches Verfahren zu konzipieren, mittels dessen höhere – als derzeit erreichbare – Verstreckungsgrade erreicht werden und damit höhere Steifigkeit und Festigkeit der Endprodukte erzielt werden.

Diese Aufgabe wird erfindungsgemäß dadurch gelöst, daß die Folien senkrecht zur Molekülrichtung ultraverstreckt werden, wobei der Verstreckungsgrad λ mindestens 10 beträgt.

Das erfindungsgemäße Verfahren wird nachstehend im Detail beschrieben. Als Ausgangsmaterial wird eine Folie aus hartelastischen Thermoplasten benutzt. Diese Folie ist unaxial orientiert und wird durch Kristallisation aus gedehnten Schmelzen ohne Nachverstrecken hergestellt. Nach der Kristallisation ist ein Tempern knapp unter der Schmelztemperatur notwendig. Die Folie kann als precursor oder als microporous vorliegen. Diese Folie wird nun senkrecht zur Molekülrichtung ultraverstreckt, wobei die Verstreckungstemperatur von der Glastemperatur bis knapp unterhalb der Schmelztemperatur reicht. Die Verstreckrate ε reicht von 10% min$^{-1}$ bis mehr als 1000% min$^{-1}$. Bei dieser Verstreckung wird ein Verstreckgrad λ von $10 < \lambda < 70$ erreicht.

Die Vorteile des aufgezeigten Verfahrens liegen darin, daß einerseits die aufwendigen Verfahren nach 1 und 2, d.h. also der Umweg über ein Gel bzw. eine Lösung vermieden wird, wobei etwa gleiche Verstreckgrade erreicht werden, und andererseits höhere Verstreckgrade als in den Verfahren nach 3 und 4 erreicht werden.

Prinzipiell ist ein Einstufenprozeß aus der Schmelze möglich, der beinhalten würde, daß nach der Kristallisation unter Dehnung der Schmelze und gleichzeitiger Temperierung eine hartelastische Folie entsteht, die in einem nachgeschalteten Arbeitsgang senkrecht zur Molekülrichtung verstreckt wird.

Als Beispiel sei die Verstreckung einer Folie des Types Celgrad microporous 3400 (Polypropoylen) angeführt. Bei der Verstreckung senkrecht zur Molekülrichtung, wobei die Verstrecktemperatur 135°C und die Verstreckrate 100% min$^{-1}$ betrug, wurden als Ergebnis folgende Werte erhalten:

Verstreckgrad λ: 50,3
E-Modul des verstreckten Materials: 28,4 GPa
Bruchspannung: 750 MPa
Bruchdehnung: 4%

## Patentansprüche

Verfahren zur Herstellung von Ultrahochmodulfasern oder -filmen aus Folien aus hartelastischen Thermoplasten, die durch uniaxiale Dehnung der Schmelze und Kristallisation hergestellt werden, dadurch gekennzeichnet, daß die Folien senkrecht zur Molekülrichtung ultraverstreckt werden, wobei der Verstreckungsgrad λ mindestens 10 beträgt.

## Revendications

Procédé de fabrication de fibres ou de pellicules à ultra-haut module à partir de feuilles de matières thermoplastiques duro-élastiques qui ont été obtenues par allongement uniaxial de masses fondues et cristallisation, caractérisé par le fait que l'on soumet les feuilles à un ultra-étirage perpendiculairement à la direction de la molécule, à un taux d'étirage λ d'au moins 10.

## Claims

A process for producing an ultrahigh modulus fiber or film from a sheet of an elastic hard thermoplastic produced by uniaxial extension of the melt and crystallization, which comprises ultradrawing the sheet perpendicularly to the molecular direction, the draw ratio λ being at least 10.